# EUROPEAN PATENT APPLICATION

(11) **EP 1 411 677 A1**
(43) Date of publication of application: **21.04.2004**
(21) Application number: 02755633.1
(22) Date of filing: 24.07.2002
(51) Int. Cl.: H04L 12/56, H04L 12/66, H04Q 7/38

(54) **CONNECTION CUTTING METHOD AND ASSOCIATED LINK CUT REPORTING METHOD**

(30) Priority: 24.07.2001 JP 2001223426; 29.03.2002 JP 2002097318
(71) Applicant: NTT DoCoMo, Inc., Tokyo 100-6150 (JP)
(72) Inventor: SUMINO, Hiromitsu, c/o NTT DoCoMo, Inc., Tokyo 100-6150 (JP); SUZUKI, Hideharu, c/o NTT DoCoMo, Inc., Tokyo 100-6150 (JP)
(74) Representative: HOFFMANN - EITLE
(86) International application number: PCT/JP2002/007479
(87) International publication number: WO 2003/010933

(57) **Abstract**

A gateway server 140 immediately releases a TCP connection A from a portable phone 110 in a case of receiving, from a base station 120 or a gateway switching station 130, a disconnection notifying signal designating that a wireless link between portable phone 110 and base station 120 or a wired link between base station 120 and gateway server 140 has been disconnected, while relaying HTTP communication between portable phone 110 and content server 160.

## Description

### Technical Field

The present invention relates to techniques for controlling connection-type communication.

### Background Art

TCP (Transmission Control Protocol) is a standard protocol for transmitting data over the Internet. In a data transmission method using TCP, a connection is first established between a communication device and a correspondent communication device, and then data is sequentially transmitted through the connection. The connection is released when data communication is completed. This type of communication effected by using a protocol typified by TCP is called connection-type communication.

In connection-type communication, a link needs to be established between a communication device and a correspondent communication device in order to establish a connection between the communication devices. Taking the OSI (Open Systems Interconnection) reference model as an example, in order to establish a TCP connection in Transport Layer (Fourth Layer), a link in a lower-level Datalink Layer (Second layer) needs to be established. Thus, in a case that a link used for a connection is disconnected for some reason, data communication through the connection is disabled.

However, even in such a situation where a connection is disabled, a network resource remains allocated to the connection. In other words, a resource in a network used for maintaining a link remains allocated to the connection, with such a resource including a particular radio frequency in the wireless zone, and also including a particular port number of a port for performing a particular process in the communication device and a particular port number in the correspondent communication device. Consequently, it becomes necessary to release the connection in order to prevent network resources which are not being used from remaining allocated.

In a conventional method a timer is used for releasing a connection, such that following transmission of a signal to a correspondent communication device, if a response is not returned therefrom within a certain time period, the connection is released. However, in the conventional method, in a case that the connection becomes disabled immediately after the timer starts counting, the connection will not be released until the count is completed, thus resulting in a delayed release of the network resource used for the connection.

Another method conventionally used for the same purpose is to regularly transmit a test signal such as a Probe signal. In this method; a Probe signal is transmitted from a communication device to a correspondent communication device; and in a case that no response is obtained from the correspondent device, it is determined that communication is discontinued, and the connection is released on the basis of the determination.

However, an increase in network traffic is caused if a transmission interval of a Probe signal is shortened to detect discontinuation of communication at an earliest timing. In contrast, if a transmission interval of a Probe signal is lengthened to minimize an increase in traffic, it takes some time until discontinuation of communication is detected. Thus, detecting a discontinuation of communication while minimizing an increase in traffic brings about an undesired result of unnecessarily prolonging a period during which a network resource remains allocated although no communication is taking place, thereby undermining effective use of limited network resources.

### Disclosure of Invention

It is thus an object of the present invention to control connection-type communication so as to remove otherwise unnecessary allocation of a network resource while minimizing any increase in network traffic.

In order to solve the above problem, the present invention provides a connection release method for use in connection-type communication between a communication device and a correspondent communication device, the connection-type communication being performed through a first connection established between the communication device and a relay device and a second connection established between the relay device and the correspondent communication device. The method comprises detecting a disconnection of a link at a relay node located on a path of a link which has been established and used for communication performed through the first connection; notifying, from the relay node to the relay device, in a case of detecting a disconnection of the link in the detecting step, the disconnection of the link; and releasing at the relay device, in a case of receiving the notification, at least the first connection.

Also provided in the present invention is a relay device comprising means for implementing the above connection release method, a program for causing the relay device to execute the method, and a computer-readable recording medium which stores the program.

Further, the present invention provides a connection release method for use in connection-type communication for which a connection is established between a communication terminal served by a mobile communication network and a communication device, the method comprising receiving at the communication device, from a switch in the mobile communication network, the switch relaying communication performed through the connection, a signal notifying a disconnection of a wireless link established between the switch and the communication terminal, the wireless link being used for the communication performed through the connection; and releasing at the communication device, in a case of receiving the signal in the receiving step, the connection with the communication terminal.

Still further, the present invention provides a communication device for performing connection-type communication for which a connection is established with a communication terminal served by a mobile communication network, comprising: means for receiving a signal from a switch in the mobile communication network, the switch relaying communication performed through the connection, the signal notifying a disconnection of a link established between the switch and the communication terminal, the link being used for the communication performed through the connection; and means for, in a case of receiving the signal by the receiving means, releasing the connection with the communication terminal.

Also described herein is a link disconnection notifying method for use in connection-type communication for which a connection is established between a communication terminal served by a mobile communication network and a communication device, the method comprising: detecting at a switch, a disconnection of a link between the switch and the communication terminal, the link being used for communication performed through the connection; and transmitting, in a case of detecting in the detecting step a disconnection of the link, from the switch to the communication device, a signal notifying the disconnection of the link.

In the present invention, there is further provided a switch in a mobile communication network, the switch relaying connection-type communication for which a connection is established between a communication terminal served by the mobile communication network and a communication device, the switch comprising: means for detecting a disconnection of a link established between the switch and the communication terminal, the link being used for communication performed through the connection; and means for, in a case of detecting a disconnection of a link by the detecting means, transmitting to the communication device a signal notifying the disconnection of the link, a program for causing the switch to execute the process of the above link disconnection notification method, and a computer-readable recording medium which stores the program.

Further, the present invention provides a connection release method for use in connection-type communication for which a connection is established between communication devices, comprising: detecting, at a relay device for relaying communication performed through the connection, a disconnection of a link established between one of the communication devices, the link being used for the connection-type communication; notifying from the relay device in a case of detecting in the detecting step a disconnection of the link between one of the communication devices, to the another of the communication devices whose link with the relay device is not disconnected, the disconnection of the link; and releasing at the another of the communication devices, in a case of being notified, in the notifying step of the disconnection of the link between the one of the communication devices, a connection with the one of the communication devices.

In accordance with the present invention, it is therefore possible to control connection-type communication in such a way as to prevent unnecessary allocation of a network resource, while also minimizing any increase in network traffic.

### Brief Description of Drawings

Fig. 1 is a block diagram illustrating a configuration of a communication system according to a first embodiment of the present invention.
Fig. 2 is a diagram describing a connection release method according to the embodiment.
Fig. 3 is a flow chart illustrating an operation of a switch according to the embodiment.
Fig. 4 is a flow chart illustrating an operation of a gateway server according to the embodiment.
Fig. 5 is a block diagram illustrating a configuration of a communication system according to a second embodiment of the present invention.
Fig. 6 is a diagram illustrating a C-Plane protocol configuration according to the embodiment.
Fig. 7 is a diagram illustrating a U-Plane protocol configuration according to the embodiment.
Fig. 8 relates to the embodiment and is a sequence chart illustrating a basic operation of each unit of the communication system in a case where HTTP communication is performed between a portable phone and a content server.
Fig. 9 relates to the embodiment and is a sequence chart illustrating an operation of each unit of the communication system in a case where a packet link in a mobile packet communication network is disconnected in the midst of HTTP communication.
Fig. 10 is a block diagram illustrating a communication system according to a fourth modification of the present invention.

### Best Mode for Carrying Out the Invention

As stated above, the present invention provides a method for releasing a connection by detecting a disconnection of a link, in a case that the link is disconnected as a result of congestion or a failure in connection-type communication. In the following, advantages and preferred embodiments of the present invention will be described in detail with reference to the attached drawings.

### [A. First Embodiment ]

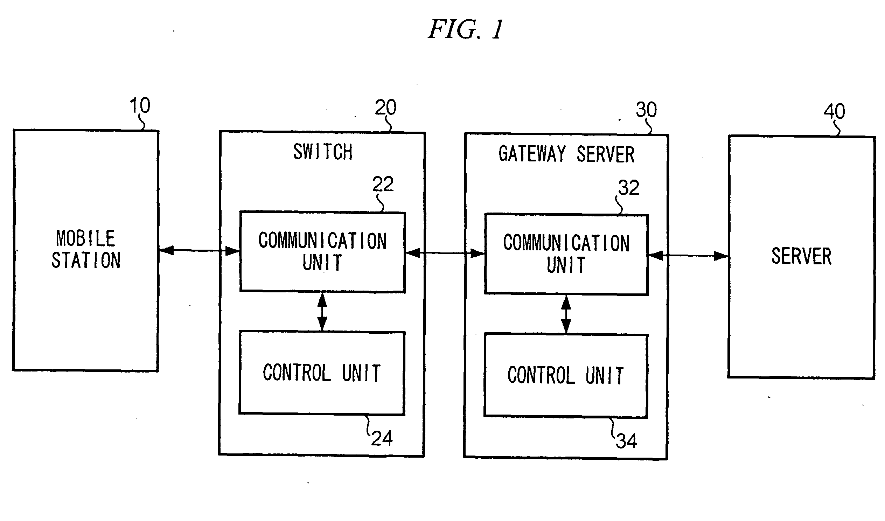

Fig. 1 is a diagram describing a configuration of a communication system according to a first embodiment of the present invention. A mobile station 10, being a communication device, is capable of performing connection-type communication, through a switch 20 and a gateway server 30, with a server 40 which is a correspondent communication device. Switch 20 comprises a communication unit 22 for controlling communication with mobile station 10 and gateway server 30 and a control unit 24 for controlling communication unit 22 and other units. Gateway server 30 comprises a communication unit 32 for controlling communication with switch 20 and server 40 and a control unit 34 for controlling communication unit 32 and other units. It is to be noted that mobile station 10 is a mobile communication terminal served by a mobile packet communication network. It is also to be noted that switch 20 is a relay node for relaying communication between mobile station 10 and gateway server 30 in the mobile packet communication network. Gateway server 30 is a relay device for mediating communication with devices belonging to another network, such devices including server 40.

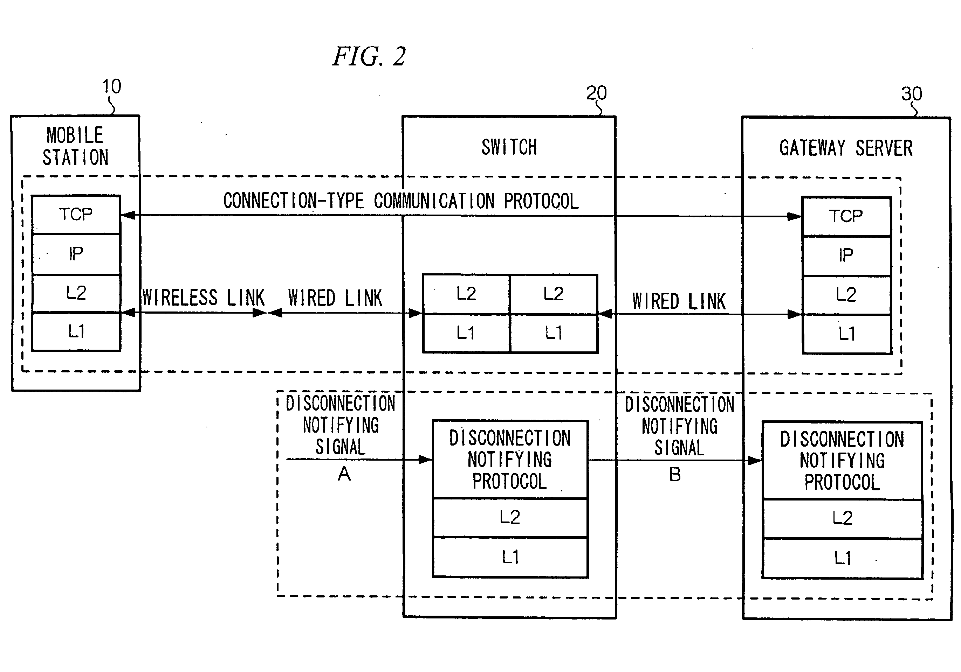

Fig. 2 is a diagram for describing connection-type communication according to the first embodiment of the present invention. As shown in the figure, mobile station 10 and gateway server 30 establish an end-to-end connection in Transport Layer by using a connection-type communication protocol, TCP. IP (Internet Protocol) is used as a protocol in a lower Network Layer. It is to be noted that, in Fig. 2, L2 and L1 are protocols used in Datalink Layer (Second Layer) and Physical Layer (First Layer), respectively. Switch 20 relays connection-type communication in an upper Transport Layer by establishing a link between mobile station 10 and gateway server 30, the link being established using L1 and L2.

In the figure, a base station (not shown) is interposed between mobile station 10 and switch 20, and communication is performed between the base station and switch 20 through a wired link (hard-wired circuit). Communication between the base station and mobile station 10 is performed through a wireless link (wireless circuit).

Further, as shown in the figure, gateway server 30 uses a disconnection notifying protocol for receiving a disconnection notifying signal in addition to a connection-type communication protocol. Similarly, switch 20 and a base station (not shown) use the disconnection notifying protocol to receive and/or transmit a disconnection notifying signal.

In the configuration shown in Fig. 2, a case is illustrated where a wireless link is suddenly disconnected while connection-type communication is being performed between mobile station 10 and server 40. Such a sudden disconnection may be caused by a situation where mobile station 10 moves outside the communication range (including a case where mobile station 10 is located within a service area but is located underground where it is not accessible by a radio wave) or a disconnection may be caused by a situation where a battery of a mobile station is exhausted. A link disconnection may occur also as a result of congestion or of a failure in a wireless zone between mobile station 10 and a base station. In such a case, a base station is programmed such that, upon detecting the disconnection signal, it transmits a disconnection notifying signal to switch 20, using the disconnection notifying protocol. Switch 20 receives the disconnection notifying signal, thereby detecting that the wireless link has been disconnected. It is to be noted that mobile station 10 is also capable of detecting a disconnection of a wireless link.

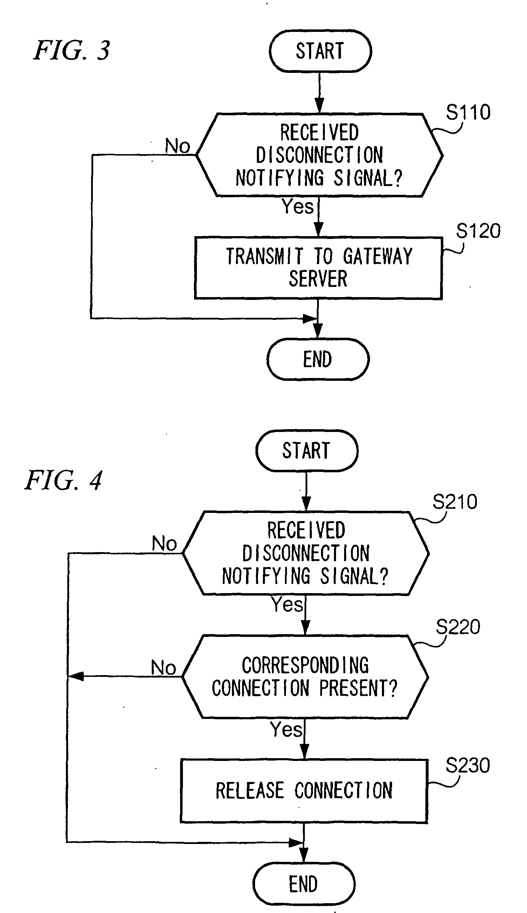

Fig. 3 is a flow chart illustrating an operation of switch 20 in a case that a wireless link is disconnected. When a wireless link between a base station (not shown) and mobile station 10 is disconnected while connection-type communication is being performed between mobile station 10 and server 40, the base station first detects the disconnection of the wireless link. Subsequently, the base station transmits to switch 20 a disconnection notifying signal for notifying a disconnection of the wireless link, using the disconnection notification protocol (a disconnection notifying signal A in Fig. 2).

Control unit 24 of switch 20 receives the disconnection notifying signal from the base station, thereby detecting that the wireless link has been disconnected. In other words, switch 20 determines that the wireless link has been disconnected in a case of receiving a disconnection notifying signal from a base station (step S110: Yes). Switch 20, upon detecting a disconnection of a wireless link, transmits to gateway server 30 a disconnection notifying signal, using the disconnection notification protocol (step S120, a disconnection notifying signal B in Fig. 2).

An example of data included in the disconnection notifying signal is a mobile station ID of mobile station 10 using the wireless link that has been disconnected. In a case that a system becomes unavailable as a result of congestion or a failure, and that all wireless channels between mobile stations 10 and a base station are disconnected, a base station ID identifying the base station is included in the disconnection notifying signal.

Further, mobile station 10 has a function of detecting a disconnection of a wireless link; and in the case of detecting, with the function, that a wireless link with a base station has been disconnected, mobile station 10 immediately releases a TCP connection with server 40, thereby ending the communication.

Fig. 4 is a flow chart for illustrating an operation of gateway server 30. A control unit 34 of gateway server 30, upon receiving from switch 20 a disconnection notifying signal (step S210, disconnection notifying signal B in Fig. 2), determines, on the basis of a mobile station ID or a base station ID included in the disconnection notifying signal, whether a TCP connection has been established between gateway server 30 and a mobile station 10 having the mobile station ID or between gateway server 30 and one or a plurality of mobile stations 10 served by a base station having the base station ID (step S220). In a case that a TCP connection is established between gateway server 30 and the mobile station(s) 10 (step S220: Yes), gateway server 30 performs a process of releasing the TCP connection (step S230). As a result, the TCP connection between gateway server 30 and mobile station(s) 10 is immediately released.

As in the foregoing description, according to the present embodiment, gateway server 30 is enabled, when receiving a disconnection notifying signal using the disconnection notification protocol while relaying connection-type communication between mobile station 10 and server 40, to immediately release a TCP connection between gateway server 30 and mobile station 10.

Since a TCP connection between gateway server 30 and mobile station 10 is immediately released when a wireless link between mobile station 10 and a base station is disconnected, a network resource allocated to the connection in the mobile packet communication network is made open for allocation to be made to another connection. Further, when compared with a case where a Probe signal is regularly transmitted for detecting a disconnection of a link, any unnecessary increase in traffic in the mobile packet communication network is minimized.

It is to be noted that, while in the present embodiment, description is given of a case where mobile station 10 performs communication with server 40 through switch 20 and gateway server 30, the present invention may be applied also to a case where mobile station 10 performs communication with server 40 without going through gateway server 30 but only through switch 20 (i.e., a case where switch 20 and server 40 perform direct communication). In this case, server 40 determines, upon receiving a disconnection notifying signal from switch 20, the signal designating that a wireless link has been disconnected, whether in the disconnection notifying signal there is included a TCP connection with a mobile station 10 having a mobile station ID ; and in the case that there is, the connection is released.

Also to be noted is that each of switch 20 and gateway server 30 executes the process described in the foregoing according to a program stored in its respective memory. Further, a program for executing the above process may be provided in a recording medium (for example, a CD-ROM, a magnetic disk), and the program may be distributed to switch 20 and gateway server 30, by means of the recording medium.

### [B. Second Embodiment]

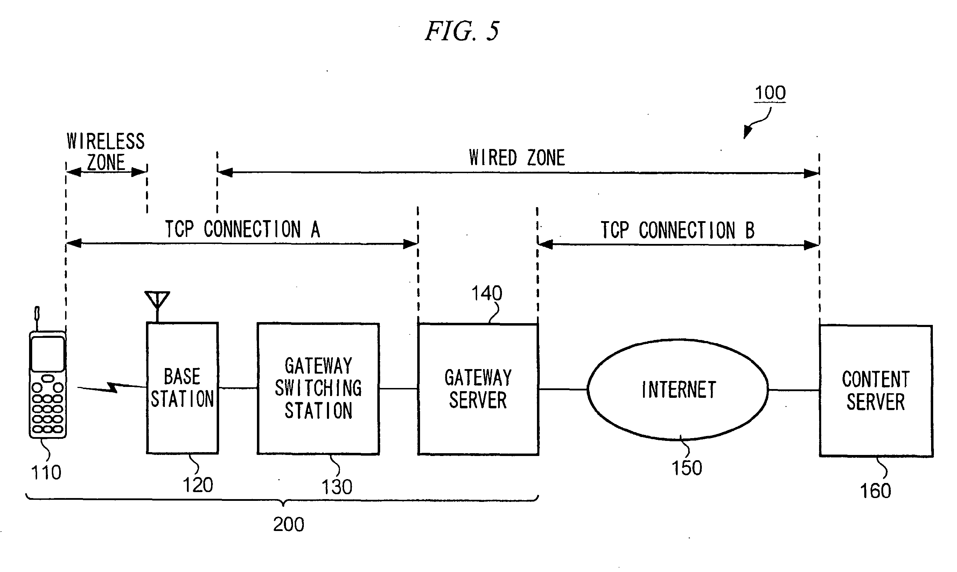

Fig. 5 is a block diagram illustrating a configuration of a communication system 100 according to a second embodiment of the present invention. As shown in the figure, communication system 100 comprises a mobile packet communication network 200 having a portable phone 110, a base station 120, a gateway switching station 130, and a gateway server 140; and the Internet 150 and a content server 160.

Mobile packet communication network 200 is a communication network providing a packet communication service to portable phone(s) 110 served by the mobile packet communication network 200, and network 200 conforms with IMT-2000 (International Mobile Telecommunication 2000). It is to be noted that communication system 100 comprises a mobile telephone network (not shown) in addition to mobile packet communication network 200. The mobile telephone network provides, to portable phone(s) 110, a voice communication service for general mobile telephones.

Portable phone 110 is a mobile station which performs wireless communication, from within a number of base stations 120 disposed in a communication service area of mobile packet communication network 200, with a base station 120 covering a wireless cell where the phone is located, whereby a packet communication service and a voice communication service are carried out. In portable phone 110 a web browser is installed, and the phone can therefore perform HTTP (HyperText Transfer Protocol) communication with content server 160.

Gateway server 140 is a proxy-type gateway server provided between gateway switching station 130 of mobile packet communication network 200 and the Internet 150. Gateway server 140 has a function of relaying data exchanges by converting data between different protocols, for example, between a communication protocol for mobile packet communication network 200 and a communication protocol for the Internet 150. When HTTP communication is performed between portable phone 110 and content server 160, gateway server 140 establishes a TCP connection A with portable phone 110 and a TCP connection B with content server 160, thereby relaying HTTP communication. With HTTP communication thus established portable phone 110 can engage in web browsing and transmission/reception of electronic mail.

Content server 160 has a function of performing HTTP communication with portable phone 110, and stores various content to be provided to portable phone 110, the content including image data, music data, application programs and the like.

Further, mobile packet communication network 200 supports a signal control protocol for call control and a user data protocol for transmitting user data, both protocols being related to a packet communication performed by portable phone 110. In the following description, the signal control protocol for call control will be referred to as a C-Plane (Control-Plane) protocol, and the user data protocol for transmitting user data as a U-Plane (User-Plane) protocol.

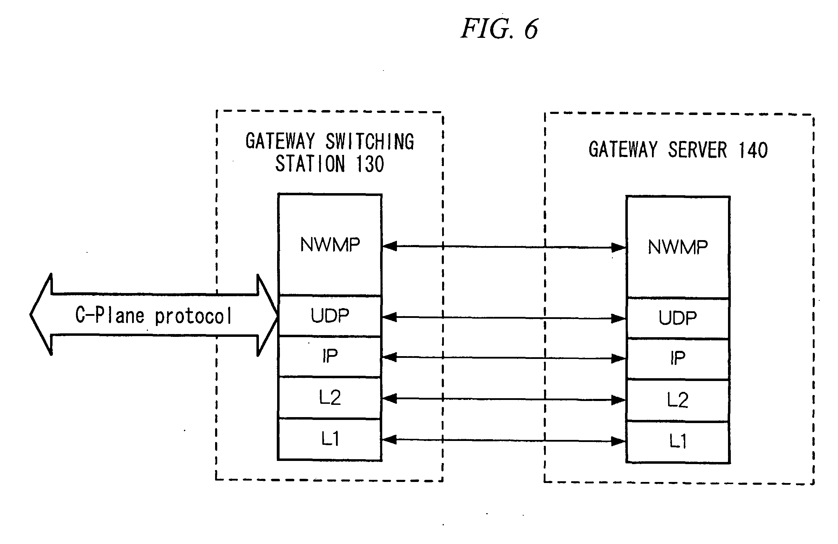

Fig. 6 is a diagram showing a configuration of C-Plane protocols supported by mobile packet communication network 200. C-Plane protocols are communication protocols for transmitting/receiving a control signal for a call connection/release, a call termination, and the like. It is to be noted that a hierarchical structure of protocols shown in the figure correspond to the OSI reference model; in an example shown in the figure, NWMP (Network Management Protocol) is a protocol corresponding to Application layer, Presentation layer, and Session layer; UDP (User Datagram Protocol) corresponding to Transport layer; IP corresponding to Network layer; L2 corresponding to Datalink layer; and L1 corresponding to Physical layer.

A control signal for connecting/releasing a packet link and for notifying a disconnection, as well as a control signal for connecting/releasing TCP connection A between gateway server 140 and portable phone 110, is transmitted/received using a C-Plane protocol, NWMP, between communication nodes (base station 120, gateway switching station 130, and gateway server 140) within mobile packet communication network 200. It is to be noted that the above packet link includes a wireless link between portable phone 110 and base station 120, as well as a wired link between base station 120 and gateway server 140.

There may be a case where a wireless link is disconnected while HTTP communication is being performed between portable phone 110 and content server 160, due to portable phone 110 moving outside the communication range or its battery becoming exhausted, or due to a wireless or wired link being disconnected as a result of congestion or of a failure occurring in mobile packet communication network 200. In such cases, when any of relay nodes for a packet link such as base station 120, gateway switching station 130, a subscriber switch station (not shown), and like stations detects a disconnection, the detecting node transmits, to gateway server 140, a control signal notifying disconnection of the packet link using NWMP.

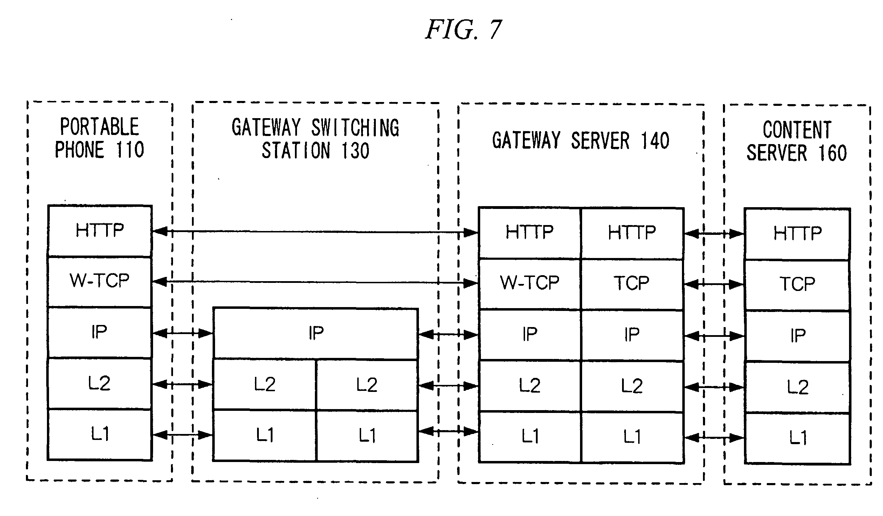

U-Plane protocol is a communication protocol for transmitting/receiving a HTTP request or a HTTP response, thereby enabling a portable phone 110 to view HTML (HyperText Markup Language) content made open to the public by content server 160 or for transmitting/receiving electronic mail. Fig. 7 is a U-Plane protocol structure for use in communication system 100 according to the present embodiment. It is to be noted that, as in Fig. 6, a hierarchical structure of protocols shown in the figure corresponds to the OSI reference model.

As shown in the figure, HTTP is used between portable phone 110 and content server 160 as a U-Plane protocol for controlling web access and transmitting/receiving of electronic mail, and here, gateway server 140 operates as a HTTP proxy.

A Transport layer protocol (W-TCP: TCP Profile over W-CDMA) is used in mobile packet communication network 200, W-TCP being configured based on TCP by tuning parameters packaged in TCP, in consideration of transmission delay time in mobile packet communication network 200 having wireless zones, so as to enable effective utilization of transmission bandwidth. On the other hand, a standard TCP is used between gateway server 140 and content server 160. For this reason, gateway server 140 converts data between W-TCP and TCP in relaying HTTP communication.

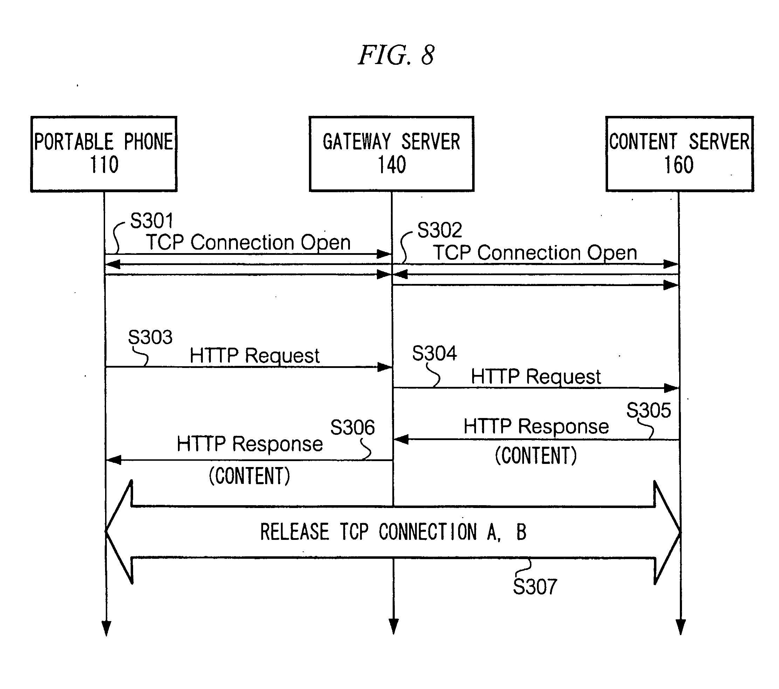

Next, description will be given, with reference to Fig. 8, of a basic operation of each unit in communication system 100 in a case that HTTP communication is performed between portable phone 110 and content server 160 through a TCP connection. It is to be noted that in a sequence chart shown in the figure, there are shown only signals transmitted/received using a U-Plane protocol.

In portable phone 110, a web browser is started first by a user, thereby causing portable phone 110 to transmit a TCP Connection Open message (hereinafter referred to as TCP Connection Open) for establishing a TCP connection with a correspondent device (step S301). Signals required for opening TCP connections A and B are transmitted/received among portable phone 110, gateway server 140, content server 160, and relay nodes relaying respective TCP connections A and B (step S302). As a result, a TCP connection A is established between portable phone 110 and gateway server 140; and a TCP connection B is established between gateway server 140 and content server 160.

It is to be noted that, in practice, before transmitting TCP Connection Open, a control signal relating to a packet link connection is transmitted/received, according to a C-Plane protocol, NWMP, among communication nodes disposed between portable phone 110 and gateway server 140 in mobile packet communication network 200, thereby establishing a packet link between portable phone 110 and gateway server 140. Subsequently, through the established packet link, a TCP control signal such as TCP Connection Open is exchanged between portable phone 110 and gateway server 140, thereby establishing TCP connection A. Also in a case of establishing a TCP connection between gateway server 140 and content server 160, a packet link is first established, and a TCP control signal is transmitted/received through the packet link. As a result, TCP connection B is established.

Subsequently, once portable phone 110 has accessed a home page provided by content server 160, a user performs, in portable phone 110, an operation input relating to menu selection, downloading of content, and the like, and a HTTP request message (hereinafter referred to as HTTP Request) including details of instruction on the basis of the operation input is transmitted from portable phone 110 to gateway server 140 through TCP connection A (step S303). Further, HTTP Request is transmitted from gateway server 140 to content server 160 through TCP connection B (step S304).

Content server 160, upon receiving HTTP Request from portable phone 110, reads, from its memory, content corresponding to the details of instruction included in HTTP Request (for example, screen data for a specified menu, specified content, and the like) and transmits to portable phone 110 as HTTP Response message (hereinafter referred to as HTTP Response) (step S305). The HTTP Response is transmitted to gateway server 140 through TCP connection B, and is transmitted from gateway server 140 to portable phone 110 through TCP connection A (step S306).

Thus, portable phone 110 is enabled to download desired content from content server 160 by way of HTTP communication. Subsequently, an instruction is made, in portable phone 110, by an operation input to end HTTP communication, thereby causing portable phone 110 to transmit a TCP Connection Close message (hereinafter referred to as TCP Connection Close) to gateway server 140. Portable phone 110, gateway server 140, and content server 160 then perform a process for releasing TCP connection A and/or TCP connection B (step S307), thereby ending HTTP communication.

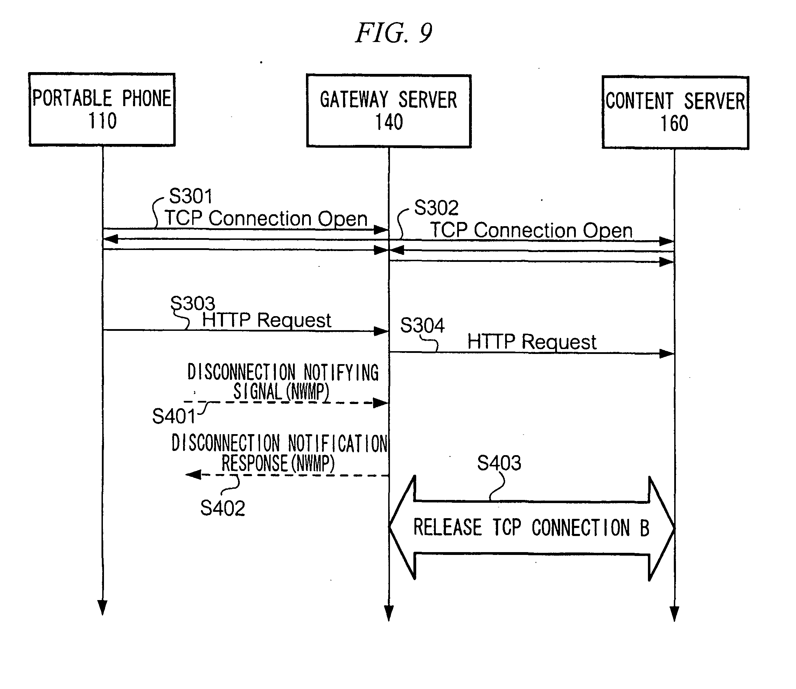

Next, a description will be given, with reference to Fig. 9, of an operation performed in each unit in communication system 100 when a packet link (wireless link and/or a wired link) between portable phone 110 and gateway server 140 is disconnected while HTTP communication is being performed between portable phone 110 and content server 160. It is to be noted that, in the figure, signals transmitted/receiver using a U-Plane protocol are shown in solid lines, and signals transmitted/received using a C-Plane protocol are shown in dashed lines. Also, in the figure, the same steps as those in Fig. 8 are assigned the same step numbers, and description thereof will be simplified.

TCP connection A is established between portable phone 110 and gateway server 140, and TCP connection B is established between gateway server 140 and content server 160 as a result of the process performed in steps S301 and S302. Next, HTTP Request is transmitted from portable phone 110 to gateway server 140 through TCP connection A (step S303). The same HTTP Request is transmitted from gateway server 140 to content server 160 through TCP connection B (step S304).

In a case that portable phone 110 moves outside a communication range or its battery becomes exhausted during a period after HTTP Request is transmitted from portable phone 110 and before HTTP Response in response to the HTTP Request is received at portable phone 110, i.e., during HTTP communication, or in a case that either congestion or a failure has occurred in a wireless zone and/or a wired zone in mobile packet communication network 200 during the same period, a packet link between portable phone 110 and gateway server 140 is disconnected.

In a case that a wireless link between portable phone 110 and base station 120 is disconnected, a disconnection notifying signal for notifying a disconnection of the wireless link is transmitted from base station 120 through gateway switching station 130 to gateway server 140. The disconnection notifying signal is a control signal transmitted using a C-Plane protocol, NWMP. Likewise, in a case that either congestion or a failure has occurred in mobile packet communication network 200, a relay node (for example, base station 120, gateway switching station 130, and a subscriber switch station (not shown)) which has detected congestion or a failure transmits the disconnection notifying signal to gateway server 140, using NWMP.

It is to be noted that, as in the first embodiment, a disconnection notifying signal includes a mobile station ID specifying a portable phone 110 using the disconnected packet link. In a case that a system becomes unavailable as a result of congestion or a failure, which causes all the wireless channels under base station 120 to be disconnected, or in a case that a wired link between base station 120 and gateway switching station 130 is disconnected, a base station ID identifying base station 120 or a switching station ID specifying a subscriber switch station is included in the disconnection notifying signal.

When the disconnection notifying signal is received at gateway server 140 (step S401), gateway server 140 first determines whether a portable phone 110 having a mobile station ID included in the disconnection notifying signal has established TCP connection A and B. In a case that information included in the disconnection notifying signal is a base station ID or a switch ID, it is determined whether a portable phone(s) 110 served by a base station having the base station ID or a portable phone(s) 110 served by a base station(s) subordinate to a switch having the switch ID has/have established TCP connection A and B. In a case that it is determined that TCP connection A and B have been established, gateway server 140 performs the following process with respect to the determined TCP connection A and B.

First, gateway server 140 performs a process for releasing TCP connection A from portable phone 110. It is to be noted that portable phone 110 has a function of detecting a disconnection of a packet link. Upon detecting a disconnection of a packet link by means of the function, portable phone 110 immediately releases TCP connection A with gateway server 140.

Gateway server 140 transmits, using NWMP, a disconnection notification response signal to a relay node which has transmitted the disconnection notifying signal (step S402). Gateway server 140 transmits TCP Connection Close to content server 160, thereby notifying the release of TCP connection B. Subsequently, gateway server 140 and content server 160 each perform a process for releasing TCP connection B (step S403).

As in the foregoing description, the present embodiment enables gateway server 140 to immediately release TCP connection A with portable phone 110 in the case of receiving a disconnection notifying signal for notifying a disconnection of a packet link in mobile packet communication network 200 while relaying HTTP communication between portable phone 110 and content server 160.

Thus, gateway server 140 is able to immediately release TCP connection A upon receiving a disconnection notifying signal. As a result, it is possible to remove otherwise unnecessary allocation of a network resource in mobile packet communication network 200. Further, when compared with a conventional method of regularly transmitting a Probe signal for detecting whether a connection is available, unnecessary traffic in mobile packet communication network 200 can be minimized.

According to the present embodiment, gateway server 140 immediately releases TCP connection B with content server 160 as well as releasing TCP connection A from portable phone 110 upon receiving a disconnection notifying signal. In the case of releasing TCP connection B, gateway server 140 notifies the release of the connection to content server 160. Thus, the same effect is attainable in the Internet 150 between gateway server 140 and content server 160, as that in mobile packet communication network 200.

It is to be noted that gateway server 140 executes the process described in the foregoing, according a program stored in a memory of the same server 140, but such a program may be stored in a device in a network such as the Internet and obtained therefrom by gateway server 140 connecting to the device. Further, the program may be provided to gateway server 140 using a recording medium such as an optical or magnetic recording medium, a semi-conductor memory, and the like. Similarly, base station 120, gateway switching station 130, and other nodes execute the process of detecting a disconnection of a packet link and transmitting a disconnection notifying signal to gateway server 140 according to a program stored in a respective memory. Such a program for executing the process may also be stored in a device in a mobile packet communication network; and base station 120, gateway switching station 130, and other nodes may connect to the device to obtain the program. Alternatively, the program may be provided in a recording medium.

### [C. Modifications]

In the foregoing, embodiments of the present invention have been described, and the present invention may be implemented in various other ways without departing from the idea of the essential features of the invention. Each of the above-described embodiments represents a mere example of the present invention, and the actual scope of the present invention is defined by the recitations in the appended claims. Further, any modification within the range of equivalency as applied to the appended claims is included in the scope of the present invention. Such modifications are described in the following.

### Modification 1:

In the above description of the first and second embodiments, TCP is used as a connection-type communication protocol; the connection-type communication protocol is not limited to TCP and can include other protocols such as SPX (Sequenced Packet eXchange) and X25. Further, connection-type communication is not limited to HTTP communication, and may include communication using other protocols such as FTP (File Transfer Protocol), SMTP (Simple Mail Transfer Protocol), and POP (Post Office Protocol).

### Modification 2:

In the above description of the second embodiment, portable phone 110 is used as a communication terminal. However, the communication terminal is not limited to portable phone 110 and may be a PDA (Personal Digital Assistant), a mobile computer, a fixed personal computer, and the like, so long as the terminal has a function of performing wireless communication and is capable of performing connection-type communication through mobile packet communication network 200. Further, the communication system may be configured in such a way that gateway server 140 is provided outside mobile packet communication network 200. Still further, content server 160 may be directly connected to gateway server 140 through a dedicated line.

### Modification 3:

In the above-described second embodiment, used as an example of mobile packet communication network 200 is a network which conforms with IMT-2000, but mobile packet communication network 200 is not limited to a network conforming to IMT-2000. Further, the present invention is not limited for use in a mobile packet communication network and may be applied in any communication network that supports connection-type communication provided to a subordinate communication terminal(s).

### Modification 4:

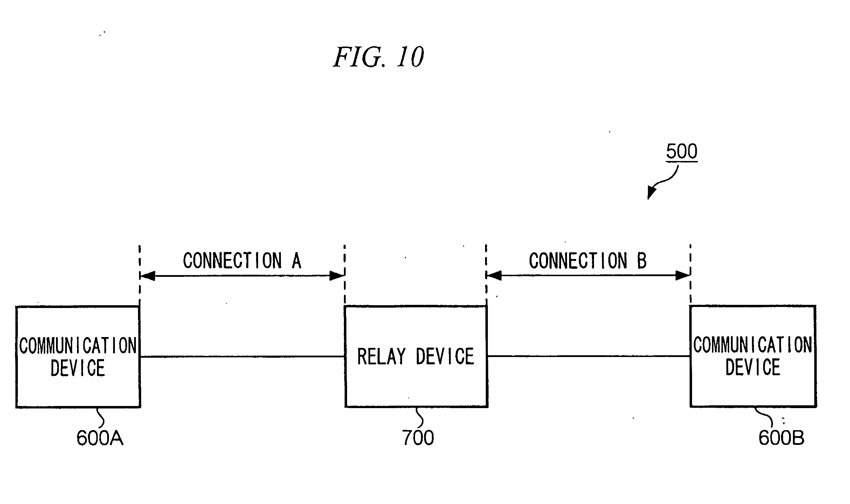

Further, the present invention may be applied to a communication system 500 such as shown in Fig. 10. In communication system 500 shown in the figure, a communication device 600A and a communication device 600B are able to perform connection-type communication through a relay device 700.

Relay device 700 establishes a connection A with communication device 600A and a connection B with communication device 600B, thereby relaying connection-type communication performed between communication device 600A and communication device 600B. Relay device 700 has a detecting function of detecting a disconnection of a link A with communication device 600A or a disconnection of a link B with communication device 600B.

Relay device 700 performs the following process in a case that, while relaying connection-type communication between communication device 600A and communication device 600B, device 700 detects a disconnection of one of link A or link B. It is to be noted that, in this modification, an example will be given of a case where relay device 700 detects a disconnection of link A, and the operation thereof will be described hereinafter.

Relay device 700, upon detecting a disconnection of link A, immediately releases connection A from communication device 600A. Communication device 600A, 600B each has a function of detecting a disconnection of a link, with a disconnection of link A then being detected by communication device 600A; and communication device 600A immediately releases connection A. Relay device 700 releases connection A and transmits, to communication device 600B, a signal for notifying the disconnection of link A (or a request for releasing of connection B), communication device 600B still having a link with relay device 700 connected. Subsequently, relay device 700 and communication device 600B each release connection B.

As is stated in the foregoing description, the present invention may be configured in such a way where relay device 700 has both a function of detecting a disconnection of a link and a function of notifying the disconnection of the link (or a request for releasing of a connection).

## Claims

1. A connection release method for use in connection-type communication between a communication device and a correspondent communication device, said connection-type communication being performed through a first connection established between said communication device and a relay device and a second connection established between said relay device and said correspondent communication device, the method comprising:
detecting a disconnection of a link at a relay node located on a path of a link which has been established and used for communication through said first connection;
notifying, from said relay node to said relay device, in a case of detecting a disconnection of said link in said detecting step, the disconnection of said link; and
releasing at said relay device, in a case of receiving the notification, at least said first connection.

2. A connection release method according to Claim 1,
wherein, in said releasing step, in a case that said relay device releases said second connection, said relay device notifies the release of said second connection to said correspondent communication device.

3. A connection release method according to Claim 1,
wherein said communication device is a terminal served by a mobile communication network, and said relay node is a base station or a switch of said mobile communication network.

4. A connection release method for use in connection-type communication for which a connection is established between a communication terminal served by a mobile communication network and a communication device, the method comprising:
receiving at said communication device, from a switch in said mobile communication network, the switch relaying communication performed through said connection, a signal notifying a disconnection of a wireless link established between said switch and said communication terminal, the wireless link being used for said communication performed through said connection; and
releasing at said communication device, in a case of receiving said signal in said receiving step, said connection with said communication terminal.

5. A connection release method for use in connection-type communication for which a connection is established between communication devices, comprising:
detecting, at a relay device for relaying communication performed through said connection, a disconnection of a link with one of said communication devices, the link being used for said connection-type communication;
notifying, in a case of detecting in said detecting step the disconnection of said link with said one of said communication devices, from said relay device to another of said communication devices whose link with said relay device is not disconnected, the disconnection of said link; and
releasing, at said another of said communication devices, in a case of being notified in said notifying step of the disconnection of said link between said relay device and said one of said communication devices, said connection with said one of said communication devices.

6. A link disconnection notifying method for use in connection-type communication for which a connection is established between a communication terminal served by a mobile communication network and a communication device, the method comprising:
detecting at a switch, a disconnection of a link between said switch and said communication terminal, the link being used for communication performed through said connection; and
transmitting, in a case of detecting in said detecting step, a disconnection of said link, from said switch to said communication device, a signal notifying the disconnection of said link.

7. A link disconnection notifying method according to Claim 6,
wherein a base station is interposed between said switch and said communication terminal, the base station establishing a wireless link with said communication terminal, with the wireless link being then used for said communication performed through said connection; and
wherein, in said detecting step, it is determined that said link established between said switch and said communication terminal has been disconnected in a case of receiving a signal notifying a disconnection of said wireless link from said base station.

8. A relay device, comprising:
means for relaying connection-type communication between a communication device and a correspondent communication device, the communication being performed through a first connection established between said communication device and said relay device and a second connection established between said relay device and said correspondent communication device;
means for receiving a signal from a relay node located on a path of a link which has been established to be used for communication performed through said first connection, the signal notifying a disconnection of the link; and
means for releasing at least said first connection in a case of receiving said signal by said receiving means.

9. A relay device according to Claim 8, further comprising:
means for, in a case that said second connection is released by said releasing means, transmitting, to said correspondent communication device, a signal notifying the release of said second connection.

10. A relay device according to Claim 8,
wherein said relay device is a gateway server.

11. A relay device according to Claim 8,
wherein said communication device is a terminal served by a mobile communication network, and said relay node is a base station or a switch of said mobile communication network.

12. A communication device for performing connection-type communication for which a connection is established with a communication terminal served by a mobile communication network, comprising:
means for receiving a signal from a switch in said mobile communication network, the switch relaying communication performed through said connection, the signal notifying a disconnection of a link established between said switch and said communication terminal, the link being used for said communication performed through said connection; and
means for, in a case of receiving said signal by said receiving means, releasing said connection with said communication terminal.

13. A switch in a mobile communication network, the switch relaying connection-type communication for which a connection is established between a communication terminal served by said mobile communication network and a communication device, said switch comprising:
means for detecting a disconnection of a link established between said switch and said communication terminal, the link being used for communication performed through said connection; and
means for, in a case of detecting a disconnection of said link by said detecting means, transmitting to said communication device a signal notifying the disconnection of said link.

14. A switch according to Claim 13,
wherein a base station is interposed between said switch and said communication terminal, the base station establishing a wireless link with said communication terminal, with the wireless link being then used for said communication performed through said connection; and
wherein, in said detecting means, it is determined that said link established between said switch and said communication terminal has been disconnected in a case of receiving, from said base station, a signal notifying a disconnection of said wireless link.

15. A program for causing a relay device for relaying connection-type communication between a communication device and a correspondent communication device, the communication being performed through a first connection established between said communication device and said relay device and a second connection established between said relay device and said correspondent communication device, to execute;
a process of receiving a signal from a relay node located on a path of a link which has been established to be used for communication performed through said first connection, the signal notifying a disconnection of the link; and
a process of releasing at least said first connection in a case of receiving said signal in said receiving process.

16. A program for causing a communication device for performing connection-type communication for which a connection is established with a communication terminal served by a mobile communication network, to execute:
a process of receiving a signal from a switch in said mobile communication network, the switch relaying communication performed through said connection and the signal notifying a disconnection of a link established between said switch and said communication terminal, the link being used for said communication performed through said connection; and
a process of, in a case of receiving said signal in said receiving process, releasing said connection with said communication terminal.

17. A program for causing a switch in a mobile communication network, the switch relaying connection-type communication for which a connection is established between a communication terminal served by said mobile communication network and a communication device, to execute:
a process of detecting a disconnection of a link established between said switch and said communication terminal, the link being used for communication performed through said connection; and
a process of, in a case of detecting a disconnection of said link in said detecting process, transmitting to said communication device a signal notifying the disconnection of said link.

18. A computer-readable recording medium which stores a program for causing a relay device for relaying connection-type communication between a communication device and a correspondent communication device, the communication being performed through a first connection established between said communication device and said relay device and a second connection established between said relay device and said correspondent communication device, to execute;
a process of receiving a signal, from a relay node located on a path of a link which has been established to be used for communication performed through said first connection, the signal notifying a disconnection of the link,; and
a process of releasing at least said first connection in a case of receiving said signal in said receiving process.

19. A computer-readable recording medium which stores a program for causing a communication device for performing connection-type communication for which a connection is established with a communication terminal served by a mobile communication network, to execute:
a process of receiving a signal, from a switch in said mobile communication network, the switch relaying communication performed through said connection and the signal notifying a disconnection of a link established between said switch and said communication terminal, the link being used for said communication performed through said connection; and
a process of, in a case of receiving said signal in said receiving process, releasing said connection with said communication terminal.

20. A computer-readable recording medium which stores a program for causing a switch in a mobile communication network, the switch relaying connection-type communication for which a connection is established between a communication terminal served by said mobile communication network and a communication device, to execute:
a process of detecting a disconnection of a link established between said switch and said communication terminal, the link being used for communication performed through said connection; and
a process of, in a case of detecting a disconnection of said link in said detecting process, transmitting to said communication device a signal notifying the disconnection of said link.
